Europäisches Patentamt

European Patent Office

Office européen des brevets

(11) Numéro de publication : **0 507 897 B1**

# (12) FASCICULE DE BREVET EUROPEEN

(45) Date de publication du fascicule du brevet :
**23.03.94 Bulletin 94/12**

(51) Int. Cl.$^5$ : **C10L 5/44**

(21) Numéro de dépôt : **91914940.1**

(22) Date de dépôt : **20.08.91**

(86) Numéro de dépôt international :
**PCT/FR91/00678**

(87) Numéro de publication internationale :
**WO 92/03523 05.03.92 Gazette 92/06**

(54) **BRISURE COMBUSTIBLE POUR GRILLADE, CONSTITUEE DE RAFLES DE MAIS DENSIFIEES SANS LIANT ET DISPOSITIF DE FRAGMENTATION NECESSAIRE A LA FABRICATION DE CE PRODUIT.**

(30) Priorité : **20.08.90 FR 9010699**

(43) Date de publication de la demande :
**14.10.92 Bulletin 92/42**

(45) Mention de la délivrance du brevet :
**23.03.94 Bulletin 94/12**

(84) Etats contractants désignés :
**AT BE CH DE DK ES FR GB GR IT LI LU NL SE**

(56) Documents cités :
**FR-A- 981 299**
**FR-A- 2 642 434**
**US-A- 4 326 854**

(73) Titulaire : **HUMBERT, Bénédicte Blanche**
**5, avenue Sainte-Croix**
**F-64100 Bayonne (FR)**

(72) Inventeur : **HUMBERT, Bénédicte Blanche**
**5, avenue Sainte-Croix**
**F-64100 Bayonne (FR)**

(74) Mandataire : **Ravina, Bernard**
**RAVINA S.A. 24, boulevard Riquet**
**F-31000 Toulouse (FR)**

EP 0 507 897 B1

## Description

L'invention concerne d'une part un nouveau produit combustible densifié, fabriqué par extrusion, à partir de rafles de maïs et destiné à la grillade sur barbecue, où, par les propriétés physico - mécaniques dues à la forme des brisures et à leur composition, il se substitue avantageusement au charbon de bois ; d'autre part elle a pour objet le dispositif utilisé, lors de la fragmentation de la matière extrudée, pour obtenir la granulométrie et maintenir la cohérence utiles à la destination de ce nouveau produit.

Les différents procédés existant pour la fabrication de combustibles reconstitués par compactage ou extrusion à partir de déchets végétaux ou sous produits agro - industriels, façonnent leurs produits sous forme de bûches ou de granulés, d'aspect lisse, monobloc, souvent cylindriques. Ces produits, destinés initialement à la combustion en foyer sont parfois utilisés par quelques consommateurs comme substitut au charbon de bois mais ils ne réunissent pas les qualités attendues tant par leur composition que par leur forme : selon leurs dimensions, ils doivent pour cet usage être concassés ; l'inflammabilité est mauvaise, la vitesse de combustion est inadaptée à la grillade, trop faible pour les bûches, trop importante pour les granulés, le pouvoir rayonnant et la tenue des braises sont moins performants que ceux des brisures revendiquées. Les seules presses capables de compacter la rafle de maïs de façon cohérente sont les extrudeuses à vis sans fin, délivrant un produit sous forme de bûche. Ces presses ne permettaient pas encore d'obtenir un produit destiné spécifiquement à la grillade, c'est à dire réunissant les caractéristiques utiles, à la fois par leur constitution, leur forme, cohésion, densité et granulométrie. Or, de ces caractéristiques dépendent les qualités d'inflammabilité, de vitesse de combustion, de pouvoir rayonnant et tenue des braises.

La présente invention permet de fabriquer à partir de rafles de maïs un produit densifié pourvu de telles caractéristiques, c'est à dire un combustible approprié à la grillade sur barbecue. La rafle de maïs est densifiée par une extrudeuse monovis apte à compacter cette matière sous forme d'un boudin de densité spécifique supérieure à 1000 kg/mètre cube et ménageant un trou continu au centre de ce boudin. La fonction d'origine du trou central est l'évacuation des gaz d'extrusion.Ce dispositif est caractérisé en ce que le boudin quitte la filière pour refroidir à l'air libre dans un chenal sur une distance réglable de 20 à 60 cm puis s'engager dans un tube guide au bout duquel elle s'empale sur une pique en forme de cône effilé. Le boudin éclate, sur la portion de matière comprise entre la pique et le tube guide, sous l'effet de la poussée de la vis d'extrusion, en morceaux cohérents de 2 à 7 cm de largeur et longueur et 2 à 3 cm d'épaisseur. Cette granulométrie se révèle décisive et optimale au niveau du comportement en combustion de la rafle de maïs densifiée pour la grillade; d'autre part la fragmentation ne diminue pas la cohésion des brisures qui durcissent, en fait, en refroidissant après découpe ; elle augmente la surface spécifique des morceaux et produit un état de surface des coupes tel que l'inflammabilité est améliorée et que la vitesse de combustion est optimale pour la grillade.

Les avantages obtenus grâce à ce dispositif consistent essentiellement - en ce qu'il autorise l'obtention d'un combustible densifié sans liant à partir de rafles de maïs, sous forme de brisures dont les caractéristiques le rendent avantageusement approprié à la grillade ; - en ce que l'énergie de fragmentation est prélevée sur l'effort de poussée de la presse, donc ne nécessite pas d'installation électro - mécanique coûteuse ; - en ce que la fragmentation confère au produit une granulométrie et forme qui facilitent l'inflammabilité du produit ; - en ce que la cohésion du produit n'est pas affectée par la fragmentation, en raison de la possibilité de réglage de la durée de refroidissement suivant la qualité désirée en fonction de la température et humidité du boudin et de la possibilité de choix de la dureté optimale pour la fragmentation par le réglage de la distance entre le tube guide et la pique ; - en ce que la pièce d'usure de l'outil est un cône en acier rechargeable aisément à l'électrode résistante à l'abrasion.

Les avantages caractérisant ce nouveau produit consistent en ce que la brisure est un nouveau combustible qui réunit un ensemble de qualités marquant des avantages vis à vis des combustibles actuels pour grillade: - pouvoir calorifique 3800 kcal/kg à 7% de teneur en eau ;
- taux d'humidité d'équilibre à 7% en atmosphère conditionnée à 20°C/65% HR ; - propreté ; - inflammabilité aisée ; - la combustion des braises dégage une concentration en monoxyde de carbone deux fois moindre que les produits normalisés actuellement sur le marché ; - vitesse de combustion adaptée à la grillade ; - écologique : fabrication et utilisation non polluante pour l'environnement.

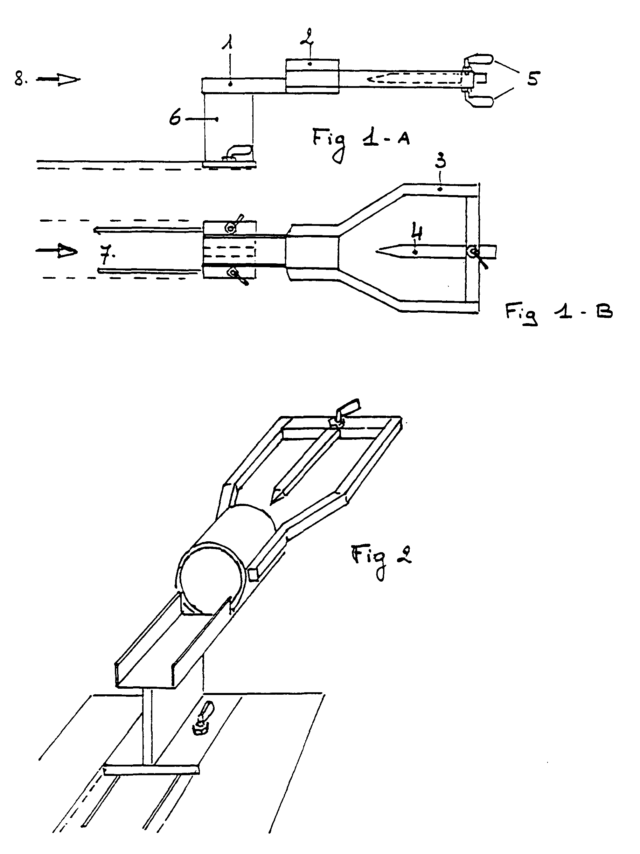

Le principe de l'invention est exposé ci-après à l'aide de dessins représentant un mode d'exécution du dispositif de fragmentation ; ensuite les caractéristiques du produit sont étayées par des résultats d'analyses en laboratoire. La figure 1 présente le dispositif en vue de côté et du dessus ; la figure 2 montre le dispositif en perspective. Le dispositif comporte un chenal (1) suivi d'un tube guide (2) de maintien du boudin (8 : sens d'écoulement) et d'un étrier (3) servant de support à une pique (4) coulissante maintenue en position par des vis de pression (5). Le dispositif est fixé sur un support (6) coulissant sur une table (7) ou bâti avec une course réglable par rapport à la sortie de la filière d'extrusion. La pique (4) coulisse dans le plan de l'axe du tube guide (2) avec une possibilité de réglage de course par rapport à la sortie du tube guide. L'étrier est positionné dans un plan horizontal et dimensionné de telle manière que les brisures ne restent pas coincées.

Résultats d'analyses en laboratoire des brisures de rafle de maïs

Pouvoir calorifique : 3800 kcal/kg à 7% humidité.

Cohésion : résistance à la compression:10 à 20 daN/cm²

Masse volumique : 500 à 600 kg/m³ en vrac

| | SERIE N°1 bûches compactes | SERIE N°2 bûches compactes et effritées | Charbon de bois carbo-épuré norme NF |
|---|---|---|---|
| TEMPÉRATURE DE BRAISE | 550°c - 650°C | 550°c - 650°C | 700°C |
| TEMPÉRATURE DE FLAMME | 750°C | 750°C | 700°C - 800°C |
| CONCENTRATION CO (À L'ALLUMAGE | 2000 PPM | 2000 PPM | - |
| CONCENTRATION CO (BRAISES) | 2500 PPM *100 PPM | 2500 PPM *100 PPM | 5000 PPM |
| CONCENTRATION CO (APRÈS RECHARGEMENT) | 5000 PPM *500 PPM | 5000 PPM *500 PPM | 5000 PPM |
| CONCENTRATION CHLORE | 0 | 0 | - |
| CONCENTRATION OXYDES D'AZOTE | 0 | 0 | - |
| CONCENTRATION OXYDES DE SOUFRE | 0 | 0 | - |

* Une deuxième analyse est effectuée 50 cm au-dessus du foyer.

## Revendications

1. Combustible pour grillade, caractérisé par sa forme de brisure et sa composition de rafle de maïs broyé, compacté par extrusion et éclaté, de granulomètrie telle que la fraction principale traverse un tamis de maille 7x7 cm sans passer à travers une maille de 2x2 cm, et de masse volumètrique en vrac de 500 à 600 Kg/m³, de cohésion représentée par une résistance à la rupture en compression de 10 à 20 da N/cm2.

2. Procédé de fabrication du combustible selon la revendication 1, caractérisé en ce qu'il comporte les étapes suivantes:

   a) Compactage sous forme de boudin avec trou central continu des rafles de maïs ou des déchets végétaux ou sous-produits agro-industriels, par presse extrudeuse à vis sans fin.

   b) Fragmentation du boudin de densité spécifique supérieure à 1000 Kg/m3 ainsi obtenue par éclatement et brisures après présentation du boudin creux extrudé quittant la filière, sur un dispositif réglable de fragmentation.

3. Dispositif réglable de fragmentation du boudin creux de combustible de matière ligno-cellulosique densifiée, pour la mise en oeuvre de l'étape b) du procédé de fabrication suivant la revendication 2, caractérisé en ce qu'il est constitué par une pique effilée (4), coulissante dans un étrier (3) et réglable en écartement par rapport à un tube guide (2) de maintien du boudin qui est présenté à ce tube par un chenal (1). L'ensemble du dispositif étant monté sur une table coulissante (7) ou tout système coulissant tel qu'il soit possible de régler la distance entre la sortie du boudin extrudé et le dispositif.

## Claims

1. Fuel for grilling, characterized by its form in flakes and by its composition of ground maize cobs compacted by extrusion and then fragmented, with a grain size distribution such that the main fraction passes through a sieve with a 7 x 7 cm mesh without passing through a sieve of 2 x 2 cm, and with a bulk volumetric mass of 500 to 600 Kg/m$^3$, and a cohesion represented by a compression breaking strength of 10 to 20 daN/cm$^2$.

2. Process of manufacture of the fuel according to Claim 1, characterized by the fact that it includes the following stages:
   a) Compacting, into the form of a sausage with a continuous central hole, of maize cobs or vegetal waste or agro-industrial by-products, by a worm screw extruder.
   b) Fragmentation of the sausage thus obtained, having a specific density of more than 1000 Kg/m3, by bursting and flaking after presentation of the extruded hollow sausage coming from the die-plate to an adjustable fragmentation device.

3. Adjustable device for the fragmentation of the hollow sausage of fuel in densified ligno-cellulosic material for the implementation of Stage (b) of the manufacturing process according to Claim 2, characterized by the fact that it consists of a sharpened spike (4), sliding in a yoke (3) adjustable in its distance in relation to a sausage holding guide tube (2), the sausage being presented to the said tube by a runner (1). The entire device is mounted on a sliding table (7) or on any sliding system such that it is possible to adjust the distance between the exit of the extruded sausage and the device.

## Patentansprüche

1. Brennstoff zum Grillen, dadurch gekennzeichnet, daß er von gebrochener Form ist und aus gemahlenen, durch Extrusion verdichteten und auseinandergebrochnen Maisstrünken besteht, deren Korngröße derart beschaffen ist, daß der Hauptanteil durch ein Sieb mit Maschengröße 7 x 7 cm paßt, ohne jedoch durch ein Sieb mit einer Maschengröße von 2 x 2 cm zu fallen, dabei eine Schüttdichte von 500 bis 600 kg/m3 und eine Kohäsion besitzt, die sich in einer Druckfestigkeit von 10 bis 20 da N/cm$^2$ ausdrückt.

2. Verfahren zur Herstellung eines Brennstoffes nach dem Anspruch 1, dadurch gekennzeichnet, daß das Verfahren folgende Stufen umfaßt:
   a) Verdichten durch eine Schneckenextrusionspresse von Maisstrünken oder anderen pflanzlichen Abfällen oder Abfallprodukten der Nahrungsmittelindustrie in Form eines Stranges mit durchgehendem Loch in der Mitte.
   b) Zerkleinerung des Stranges von einer spezifischen Dichte über 1000 kg/m3 durch Aufplatzen und Brechen nach Durchlaufen des aus der Düse tretenden extrudierten Hohlstrangs durch eine verstellbare Zerkleinerungsvorrichtung.

3. Verstellbare Vorrichtung zur Zerkleinerung von Brennstoff-Hohlsträngen aus verdichtetem, holzigen und zellstoffhaltigem Material für die Durchführung der Stufe b) des Herstellungsverfahrens gemäß Anspruch 2, dadurch gekennzeichnet daß sie aus einer zugespitzten Stange (4) besteht, die in einem Bügel (3) gleitet und dessen Abstand gegenüber einem Führungsrohr (2) verstellbar ist, das den Strang aufnimmt, der das Rohr in einem Kanal (1) durchläuft. Die Vorrichtung befindet sich auf einem Schiebetisch (7) oder einem anderen, verschiebbaren System, so daß es möglich ist, die Entfernung zwischen Ausgang des extrudierten Stranges und der Vorrichtung einzustellen.

Fig 1-A

Fig 1-B

Fig 2